# EUROPEAN PATENT SPECIFICATION

(11) **EP 0 383 561 B1**
(45) Date of publication and mention of the grant of the patent: **10.01.1996**
(21) Application number: 90301546.9
(22) Date of filing: 14.02.1990
(51) Int. Cl.: A01B 29/04

(54) **Coil apparatus**
Schraubenförmige Vorrichtung
Appareil à hélice

(30) Priority: 14.02.1989 GB 8903316
(43) Date of publication of application: 22.08.1990
(73) Proprietor: FLEXI-COIL (UK) LIMITED, York YO4 4NF (GB)
(72) Inventor: Bradley, John, Pocklington, North Humberside (GB)
(74) Representative: Needle, Jacqueline

(56) References cited:
- EP-A- 0 280 399
- EP-A- 0 294 903
- EP-A- 0 356 083
- DE-C- 874 966
- US-E- 18 039
- Brochure "TURFSHAPER"

## Description

The present invention relates to apparatus comprising a coil and means for cleaning the coil. The invention also relates to earth working apparatus and to means for cleaning such apparatus.

A number of forms of apparatus used for earth working include a flexible helical coil mounted on a frame for rotation about the longitudinal axis of the coil relative to the frame. In operation the coil rotates about a substantially horizontal axis by the effect of contact of the earth with the coil when the coil is dragged across the ground, for example by a tractor. The rotation of the coil may be used for example for crumbling the earth to provide a seed bed, or the apparatus may be used as a plough packer for consolidating the land after ploughing, again to provide a seed bed.

A difficulty with such coils is that, particularly in wet conditions, earth clings to the coils, blocking the coils and reducing efficiency of operation. Previous known attempts to clean such a coil have been made by providing a fixed scraper bar parallel to the axis of the coil and positioned close to the periphery of the coil so as to scrape off excess earth. However such attempts have been unsuccessful in adequately cleaning the turns of the coil.

EP-A-0294903 describes an apparatus comprising a coil mounted for rotation about the longitudinal axis of the coil, and means for cleaning the coil, said cleaning means comprising a plurality of cleaning elements for engaging with or protruding into said coil, wherein each said cleaning element is an elongate member made of a resilient material. This specification proposes a number of different cleaning members, such as rotatable elements, springs, and spiked chains, which are movable by contact with the coil.

It is an object of the present invention to provide apparatus comprising more efficient means for cleaning a coil than those previously proposed.

According to the present invention, apparatus of the type defined above is characterised in that each said cleaning element is a brush extending substantially transversely to the longitudinal axis of the coil, and in that each said brush has a plurality of bristles spaced in a direction extending substantially at right angles both to the longitudinal axis of the coil and to the extent of the brush such that the bristles are enabled to bend or flex in a direction substantially parallel to said longitudinal axis.

The present invention also extends to an earth working apparatus comprising a frame, a coil supported by the frame for rotation about the longitudinal axis of the coil in contact with the earth for the purposes of earth working, and means for cleaning the coil, said cleaning means comprising a plurality of cleaning elements for engaging with or protruding into said coil, wherein each said cleaning element is a member made of resilient material, the earth working apparatus being characterised as above.

It will be appreciated that during rotation of the coil, the spaces between turns of the coil in effect progress along said longitudinal axis of the coil. It is therefore not possible to clean the coil by fixed, rigid protrusions which intrude into the spaces between the turns of the coils, since such fixed protrusions would jam against the rotating turns of the coil. However, the bristles of the brushes are spaced in the specified direction to enable the bristles to bend or flex by the progression of the coil so that the bristles are moved out of any potential jamming position.

In a preferred embodiment, the or each said brush is formed of a plastics material, for example, of nylon. This enables the brushes to clean the coil by contact with its turns, but with little wear to the coil.

It is known for the coil to be a composite coil formed of two, oppositely wound coils arranged adjacent to each other along a common longitudinal axis. This arrangement avoids any tendency for the rotating composite coil to cause the earth working apparatus in which it is mounted to undergo a slewing motion. However, there is an increased build up of earth at the central area of such a composite coil, where the two coils are adjacent, with which conventional cleaning means have been unable to cope. The brushes of the present invention can be arranged to protrude into such a composite coil at or near to any area where two coils, for example, two oppositely wound coils, are adjacent and provide efficient cleaning at that area without risk of jamming. Of course, such a composite coil could be formed from more than two adjacent coils, respective brushes being provided to protrude into the composite coil at each area where two coils are adjacent.

In use, the coil contacts the ground with its longitudinal axis extending substantially horizontally. Each brush extends transversely of said longitudinal axis, and is spaced above the ground. The spacing of each brush above the ground can be chosen as required, but in general it is preferred that the brushes are substantially level with or below the level of, the substantially horizontal diameter of the coil. This ensures that material removed from the coil by each said brush does not fall into the coil.

In an embodiment, each said brush is supported on a shaft extending substantially parallel to the longitudinal axis of said coil. Preferably, each said brush is carried on said shaft by way of a clamping assembly releasably engageable with said shaft at a selected position along the length of said shaft.

In a preferred embodiment, cleaning rotors may also be carried by said shaft. Preferably, each said cleaning rotor is rotatable about an axis extending substantially at right angles both to the longitudinal axis of the coil and to the transverse extent of the or each said cleaning member. Each said cleaning rotor has outwardly projecting portions which engage with or protrude into said coil.

In one embodiment at least two spaced brushes are carried by said shaft, and a plurality of spaced cleaning rotors are also carried by said shaft. The projecting portions of said cleaning rotors may comprise spikes, bars, blades or other projections arranged to protrude between turns of the coil. Rotation of said rotors is arranged to pivot their projections clear of the coil to allow the effective longitudinal progression of the spaces of the coil upon rotation of the coil, and therefore to prevent jamming.

In earth working apparatus where the coil is supported by a frame, said shaft is preferably also supported by said frame.

In a preferred form, said coil is substantially helical and the pitch of said helical coil is substantially the same as that of said brushes such that said brushes protrude between the turns of said coil in a regular manner. Of course, in other arrangements a different pitch may be used, for example, said brushes may be arranged to have a pitch which is a multiple or a fraction of the pitch of the helical coil.

Preferably, said helical coil has a central axial core extending substantially parallel to said shaft.

In the case of an earth working coil, it is preferred that the earth working coil is driven in rotation by the effect of contact with the ground as the coil is moved over the earth. Thus, at least in preferred embodiments of the invention, there may be provided cleaning means for an earth working coil which is powered entirely by the movement of the earth working coil over the ground, and which allows thorough cleaning of the earth working coil by the protrusion of cleaning elements into the spaces between the turns of the coil.

Embodiments of the present invention will hereinafter be described, by way of example, with reference to the accompanying drawings, in which:-
Figure 1 shows a diagrammatic plan view of an earth working apparatus of a first embodiment of the invention,
Figure 2 shows a side elevation, taken along the arrow B in Figure 1, of a cleaning member of the apparatus of Figure 1,
Figure 3 shows a diagrammatic plan view of a further embodiment of an earth working apparatus which, insofar as it is illustrated with cleaning members in the form of cleaning rods, is outside the scope of the present invention,
Figure 4 shows schematically a side elevation of the apparatus of Figure 3, and
Figure 5 shows a plan view of a still further embodiment of an earth working apparatus.

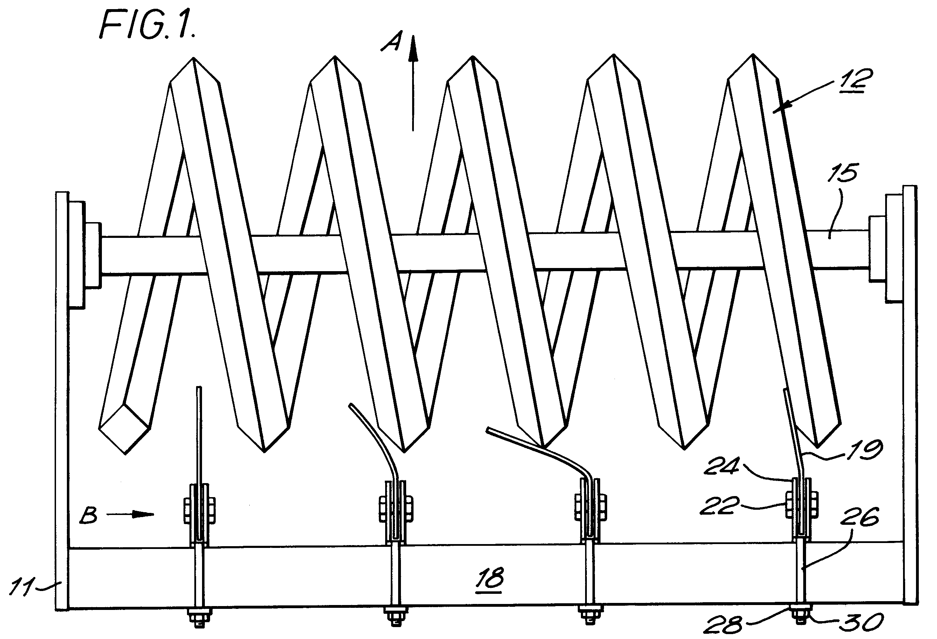

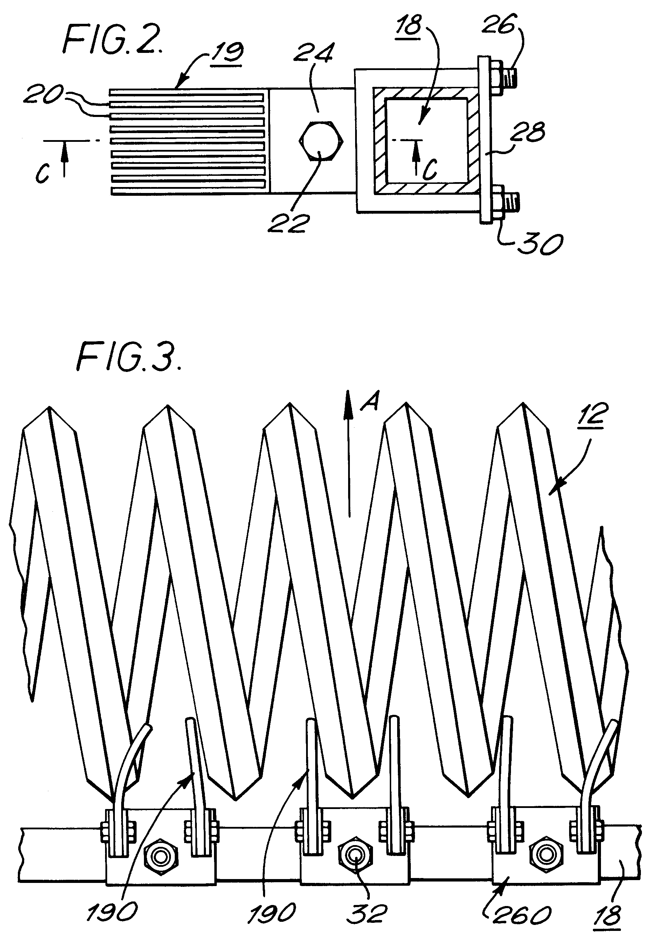

The earth working apparatus illustrated in Figures 1 and 2 includes a frame 11 arranged to be attached to a vehicle, for example at the rear of a tractor, for movement over the land in a direction for example as indicated by the arrow A, although in some circumstances the apparatus may move in the opposite direction to the direction A.

A flexible helical coil 12 is mounted for example, by way of plates (not shown), on a central core 15 which is journalled for rotation about the longitudinal axis of the coil 12. The coil 12 may be of conventional design, for example a 1½ inch square steel bar wound along a helix having a pitch of 5½ inches. In operation the coil 12 is rotated by the effect of the coil being dragged over the ground by the tractor.

The frame 11 also supports a shaft 18 of a cleaning assembly for the coil 12. This shaft 18 is in the form of a tie-bar and extends substantially parallel to the core 15 and hence to the longitudinal axis of the coil 12. Each end of the bar 18 is fixed to the frame 11 by appropriate means.

The bar 18 carries a plurality of cleaning elements 19, each being in the form of an elongate member made of a resilient material and extending substantially transversely relative to the longitudinal axis of the coil 12. As is made clear in Figure 2, each said elongate cleaning member 19 is a brush formed from a plurality of spaced bristles 20. The bristles 20 are spaced in a direction which extends substantially at right angles both to the longitudinal axis of the coil 12 and to the transverse extent of the brush indicated by the axis C-C. The bristles 20 are formed of a resilient plastics material for example, of nylon. This enables the bristles to bend or flex out of the plane containing the axis C-C and substantially along the longitudinal axis of the coil as is schematically illustrated in Figure 1.

Each brush 19 is fixed by way of a bolt 22 between two plates 24 extending from and fixed to a substantially U-shaped channel member 26 whose two arms are formed as bolts. It will be appreciated that each said brush 19 can be held in a fixed position along the bar 18 by way of a clamping assembly comprising a clamping plate 28 which is mounted on the arms of the channel member 26 and held in position by appropriate nuts 30. Of course, the position of each brush 19 can be adjusted by releasing the respective nuts 30, sliding the channel member 26 along the bar 18, and then re-tightening the nuts 30.

Preferably, but this is not illustrated in Figure 1, at least one brush 19 is arranged to protrude within each space defined between two adjacent turns of the coil 12. In operation, the earth working coil 12 is rotated as it is pulled along the ground by the effect of its contact with the ground. As the coil 12 rotates, the spaces between the turns of the coil effectively progress along the longitudinal axis of the coil. This imparts a force to the brushes 19 in a direction substantially parallel to the longitudinal axis of the coil, which force bends the brushes 19 out of the plane containing the axis C-C. In this way it is ensured that as the coil rotates, the brushes 19 protruding between the turns of the coil do not jam the coil. Of course, as the brushes 19 come into contact with the coil 12 they are effective to clean the coil, and, as they protrude between the turns, they prevent the formation of bridges of material across the spaces between the turns of the coil. Because the brushes 19 are made of a plastics material there is little or no wear on the coil 12 which can be attributed to the cleaning assembly.

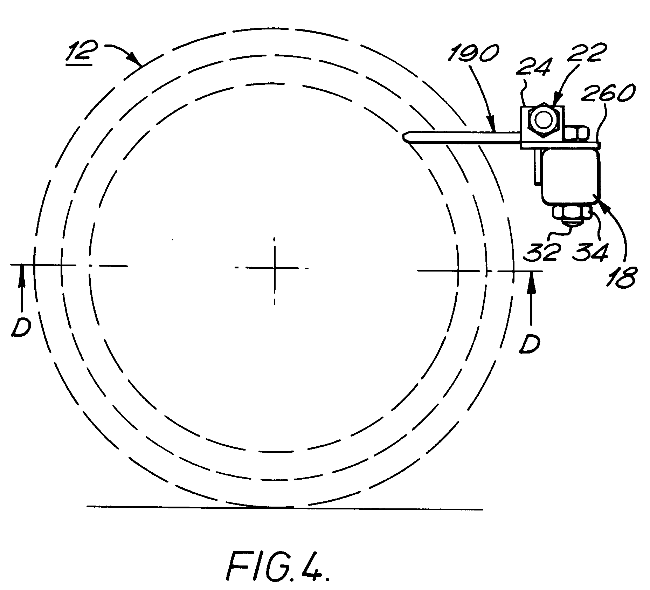

Figures 3 and 4 show an alternative embodiment of an earth working apparatus of the invention in which features similar to those of the embodiment of Figures 1 and 2 have been given the same reference numerals. In the embodiment of Figures 3 and 4 a respective elongate, resilient cleaning member 190 is associated with each space between adjacent turns of the coil 12. In this respect, insofar as the apparatus in Figures 3 and 4 is illustrated with cleaning members in the form of rods 190, it is outside the scope of the present invention. A common clamping assembly 260 is provided for clamping each two adjacent cleaning members 190 onto the bar 18.

Figure 4 shows a side elevation of earth working apparatus as Figure 3, but Figure 4 is outside the scope of Claim 1 as each cleaning member 190 of Figure 4 is shown to be an elongate rod. As can be seen from Figure 4, the clamping assembly 260 to which each pair of cleaning members 190 is fixed, comprises a substantially L-shaped plate fixed to the bar 18 at a selected position by way of a bolt 32 and a nut 34. Of course, for this construction appropriate holes (not visible) must be drilled through the bar 18. Alternatively, the cleaning members 190 may be releasably engaged with the bar 18 at selected positions by way of a clamping assembly as shown in Figures 1 and 2.

It will be appreciated that the longitudinal axis of the coil 12 is generally arranged to extend substantially horizontally relative to, and above, the ground. Generally it is preferred that the transverse extent of the cleaning members, as 19 and 190, should be level with, or below, the horizontal diameter D-D of the coil 12 to prevent excess earth removed by the cleaning members from falling into the coil 12. However, it has been found that cleaning members 190, as shown in Figures 3 and 4, can be positioned above the level of the substantially horizontal diameter.

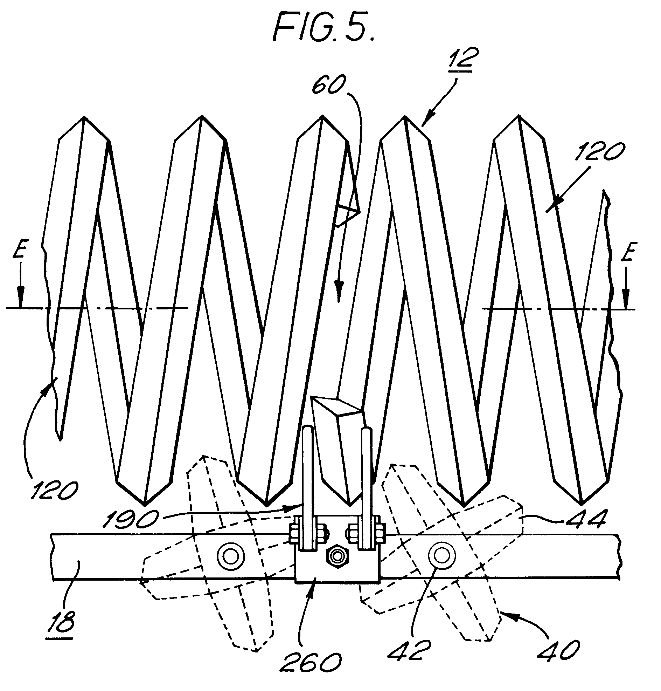

Figure 5 shows a plan view of an embodiment in which the coil 12 is a composite coil formed of two, oppositely wound coils 120. The coils 120 are arranged adjacent to each other on a common core (not shown) such that the coils 120 are coaxial and thereby have a common longitudinal axis E-E. As previously, each of the two coils 120 is a flexible helical coil, but as they are oppositely wound there is a central area, generally referenced 60, defined where the two coils 120 are adjacent. Previously it was not possible to effectively clean this central area 60 during operation such that a build-up of earth was experienced.

In the embodiment shown in Figure 5, the cleaning means for the coil comprises a number of rotatable cleaning rotors 40 carried by the bar 18. Such a cleaning means is described in our published application No. GB-A-2201073. Each rotor 40 has a number of outwardly projecting blades or arms 44 selectively arranged to protrude into the coil 12 and to extend transversely with respect to the longitudinal axis of the coil 12. Each rotor 40 is fixed to the bar 18 by way of a bolt 42 about which the rotor 40 is rotatable. It will be seen that the bolt 42, which defines the rotation axis, extends substantially at right angles both to the longitudinal extent of the coil and to the transverse extent of the blades 44.

There is a cleaning rotor 40 associated with each space defined between two adjacent turns of each of the coils 120. However, at the area 60 where the two coils 120 are adjacent it is not possible to provide a cleaning element such as the rotor 40 because the rotation of the coil 12 causes the turns of the oppositely wound coils 120 to progress in opposite directions. It will be appreciated that if a rotor 40 was positioned in the central area 60 it would cause jamming of the rotation of the coil 12.

Accordingly, in the embodiment of Figure 5 a cleaning assembly comprising two cleaning members 190 is clamped by way of a clamping assembly 260 to the bar 18. As previously, the resilience of the cleaning members 190 enables them to flex upon rotation of the coil 12 to avoid jamming. As indicated in Figure 5, the clamping assembly 260 and the cleaning members 190 are arranged at a higher level above the ground than the cleaning rotors 40 such that the clamping assembly 260 does not foul the rotors 40 during operation. Of course, a cleaning assembly formed of one or more flexible cleaning members 190 could be provided in any situation where two, oppositely wound coils as 120 are adjacent. The use of oppositely wound coils helps to prevent slewing of an earth working apparatus upon rotation of the earth working coil.

In the embodiments illustrated a single cleaning member or a single cleaning rotor is associated with each space between two turns of the coil 12. Alternatively, two or more adjacent cleaning members could be arranged to protrude into each said space.

Of course, it will be appreciated that the cleaning members and the cleaning rotors could be shaped differently to the shapes illustrated.

## Claims

1. Apparatus comprising a coil (12) mounted for rotation about the longitudinal axis of the coil, and means (18, 19; 18, 190) for cleaning the coil, said cleaning means comprising a plurality of cleaning elements (19, 190) for engaging with or protruding into said coil, wherein each said cleaning element (19, 190) is an elongate member made of a resilient material, characterised in that each said cleaning element is a brush extending substantially transversely to the longitudinal axis of the coil, and in that each said brush has a plurality of bristles (20) spaced in a direction extending substantially at right angles both to the longitudinal axis of the coil (12) and to the extent of the brush such that the bristles (20) are enabled to bend or flex in a direction substantially parallel to said longitudinal axis.

2. Apparatus as claimed in Claim 1, wherein said coil (12) is a composite coil formed of two or more oppositely wound coils (120) arranged adjacent to each other along a common longitudinal axis, and wherein said brushes (19) are arranged to protrude into said composite coil at or near to any area (60) where two coils are adjacent.

3. Apparatus as claimed in Claim 1 or 2, wherein each said brush (19) is formed of a plastics material, for example, of nylon.

4. Apparatus as claimed in any preceding claim, which,in use, is arranged such that the coil (12) contacts the ground with its longitudinal axis extending substantially horizontally, and each said brush (19) extends transversely of said longitudinal axis, and is spaced above the ground, wherein, preferably, the spacing of each brush above the ground is such that the brushes are substantially level with or below the level of, the substantially horizontal diameter of the coil.

5. Apparatus as claimed in any preceding claim, wherein each said brush (19) is supported on a shaft (18) extending substantially parallel to the longitudinal axis of said coil, and wherein preferably, each said brush is carried on said shaft (18) by way of a clamping assembly (26 - 30) releasably engageable with said shaft at a selected position along the length of said shaft.

6. Apparatus as claimed in Claim 5, wherein cleaning rotors (40) are also carried by said shaft (18), and wherein preferably, each said cleaning rotor (40) is rotatable about an axis extending substantially at right angles both to the longitudinal axis of the coil and to the transverse extent of each said brush, and wherein preferably each said cleaning rotor has outwardly projecting portions which engage with or protrude into said coil.

7. Apparatus as claimed in Claim 5 or 6, wherein at least two spaced brushes (19) are carried by said shaft (18), and a plurality of spaced cleaning rotors (40) are also carried by said shaft.

8. Apparatus as claimed in any of Claims 5 to 7, arranged as earth working apparatus, and wherein the coil (12) is supported by a frame (11), and wherein said shaft (18) is also supported by said frame, and wherein, preferably said coil has a central axial core (15) extending substantially parallel to said shaft (18).

9. Apparatus as claimed in any preceding claim, wherein said coil (12) is substantially helical and the pitch of said helical coil is substantially the same as that of said brushes (19) such that said brushes protrude between the turns of said coil in a regular manner.

## Patentansprüche

1. Vorrichtung mit einer Wendel (12), die um die Längsachse der Wendel rotierbar befestigt ist, und einer Einrichtung (18, 19; 18, 190) zum Reinigen der Wendel, wobei die Reinigungseinrichtung eine Mehrzahl von Reinigungselementen (19, 190) zum Eingriff mit der Wendel oder zum Vorragen in diese aufweist, wobei jedes der Reinigungselemente (19, 190) ein längliches aus einem elastischen Material gefertigtes Teil ist, dadurch gekennzeichnet, daß jedes Reinigungselement eine Bürste ist, die sich im wesentlichen quer zur Längsachse der Wendel erstreckt, und daß jede Bürste eine Mehrzahl von Borsten (20) aufweist, die in einer Richtung, die sich im wesentlichen im rechten Winkel zu sowohl der Längsachse der Wendel (12) als auch der Ausdehnung der Bürste erstreckt, beabstandet sind, so daß sich die Borsten (20) in eine Richtung im wesentlichen parallel zur Längsachse biegen oder nachgeben können.

2. Vorrichtung nach Anspruch 1, wobei die Wendel (12) eine zusammengesetzte Wendel ist, die aus zwei oder mehr entgegengesetzt gewundenen Wendeln (120) gebildet ist, die nebeneinander entlang einer gemeinsamen Längsachse angeordnet sind, und wobei die Bürsten (19) so angeordnet sind, daß sie in die zusammengesetzte Wendel an oder nahe einer beliebigen Stelle (60), an der die zwei Wendeln einander benachbart sind, vorstehen.

3. Vorrichtung nach Anspruch 1 oder 2, wobei jede Bürste (19) aus einem Kunststoffmaterial, z.B. aus Nylon, gebildet ist.

4. Vorrichtung nach einem der vorhergehenden Ansprüche, welche beim Gebrauch so angeordnet ist, daß die Wendel (12) in Kontakt mit dem Boden ist, wobei ihre Längsachse sich im wesentlichen horizontal erstreckt, und jede Bürste (19) sich quer zur Längsachse erstreckt und oberhalb des Bodens beabstandet ist, wobei vorzugsweise der Abstand jeder Bürste über dem Boden dergestalt ist, daß die Bürsten im wesentlichen auf gleicher Höhe mit oder unterhalb der Höhe des im wesentlichen horizontalen Durchmessers der Wendel sind.

5. Vorrichtung nach einem der vorhergehenden Ansprüche, wobei jede der Bürsten (19) auf einem Schaft (18) gestützt ist, der sich im wesentlichen parallel zur Längsachse der Wendel erstreckt, und wobei vorzugsweise jede dieser Bürsten auf dem Schaft (18) mittels einer Klemmanordnung (26-30) getragen ist, die lösbar mit dem Schaft in einer gewählten Position entlang der Länge des Schaftes eingreifen kann.

6. Vorrichtung nach Anspruch 5, wobei Reinigungsrotoren (40) auch von dem Schaft (18) getragen sind und wobei vorzugsweise jeder Reinigungsrotor (40) um eine Achse rotierbar ist, die sich im wesentlichen im rechten Winkel zu sowohl der Längsachse der Wendel als auch zur transversalen Ausdehnung der Bürste erstreckt, und wobei vorzugsweise jeder Reinigungsrotor nach außen vorstehende Abschnitte aufweist, die mit der Wendel in Eingriff kommen oder in diese vorstehen.

7. Vorrichtung nach Anspruch 5 oder 6, wobei mindestens zwei voneinander beabstandete Bürsten (19) von dem Schaft (18) getragen sind und eine Mehrzahl von beabstandeten Reinigungsrotoren (40) auch von dem Schaft getragen sind.

8. Vorrichtung nach einem der Ansprüche 5 bis 7, die als eine Bodenbearbeitungs-Vorrichtung angeordnet ist, und wobei die Wendel (12) von einem Rahmen (11) gestützt ist, und wobei der Schaft (18) auch von dem Rahmen gestützt ist, und wobei vorzugsweise die Wendel einen zentralen axialen Kern (15) aufweist, der sich im wesentlichen parallel zu dem Schaft (18) erstreckt.

9. Vorrichtung nach einem der vorhergehenden Ansprüche, wobei die Wendel (12) im wesentlichen schraubenförmig ist und die Gewindesteigung der schraubenförmigen Wendel im wesentlichen dieselbe ist wie die der Bürsten (19), so daß die Bürsten zwischen den Windungen der Wendel in regelmäßiger Weise vorstehen.

## Revendications

1. Appareil comprenant une spirale (12) montée à rotation autour de l'axe longitudinal de la spirale, et des moyens (18, 19; 18, 190) pour nettoyer la spirale, lesdits moyens de nettoyage comprenant plusieurs éléments de nettoyage (19, 190) destinés à entrer en contact avec ladite spirale ou à faire saillie à l'intérieur de celle-ci, dans lequel chacun desdits éléments de nettoyage (19, 190) est un élément allongé, réalisé en une matière élastique, caractérisé en ce que chacun desdits éléments de nettoyage est une brosse qui s'étend sensiblement transversalement par rapport à l'axe longitudinal de la spirale, et en ce que chacune desdites brosses possède plusieurs poils (20) espacés dans une direction qui s'étend sensiblement à angles droits à la foie par rapport à l'axe longitudinal de la spirale (12) et par rapport au sens d'extension de la brosse, de telle sorte que les poils (20) soient rendue capables de se courber ou fléchir dans une direction sensiblement parallèle audit axe longitudinal.

2. Appareil selon la revendication 1, dans lequel ladite spirale (12) est une spirale complexe formée de deux ou plus de deux spirales (120) enroulées dans les sens opposés et disposées à côté l'une de l'autre le long d'un axe longitudinal commun, et dans lequel lesdites brosses (19) sont agencées pour faire saillie à l'intérieur de ladite spirale complexe dans toute zone ou près de toute zone (60) où deux spirales sont adjacentes.

3. Appareil selon la revendication 1 ou 2, dans lequel chacune desdites brosses (19) est réalisée en une matière plastique, par exemple en nylon.

4. Appareil selon l'une quelconque des revendications précédentes, qui, en service, est agencé de telle sorte que la spirale (12) entre en contact avec le sol alors que son axe longitudinal s'étend sensiblement horizontalement, et que chacune desdites brosses (19) s'étend transversalement par rapport audit axe longitudinal et est espacée au-dessus du sol, dans lequel, de préférence, l'espacement de chaque brosse au-dessus du sol est tel que les brosses soient sensiblement au niveau ou au-dessous du niveau du diamètre sensiblement horizontal de la spirale.

5. Appareil selon l'une quelconque des revendications précédentes, dans lequel chacune desdites brosses (19) est montée sur un arbre (18) qui s'étend sensiblement parallèlement à l'axe longitudinal de ladite spirale, et dans lequel, de préférence, chacune desdites brosses est portée sur ledit arbre (18) au moyen d'un ensemble de serrage (26-30) qui peut être fixé, de façon desserrable, sur ledit arbre dans une position sélectionnée le long dudit arbre.

6. Appareil selon la revendication 5, dans lequel des rotors de nettoyage (40) sont également portés par ledit arbre (18), et dans lequel, de préférence, chacun desdits rotors de nettoyage (40) peut tourner autour d'un axe qui s'étend sensiblement à angles droits à la fois par rapport à l'axe longitudinal de la spirale et par rapport à l'étendue transversale de chacune desdites brosses, et dans lequel, de préférence, chacun desdits rotors de nettoyage possède des parties qui font saillie vers l'extérieur et qui entrent en contact avec ladite spirale ou font saillie à l'intérieur de celle-ci.

7. Appareil selon la revendication 5 ou 6, dans lequel au moins deux brosses espacées (19) sont portées par ledit arbre (18), et plusieurs rotors espacés de nettoyage (40) sont également portés par ledit arbre.

8. Appareil selon l'une quelconque des revendications 5 à 7, agencé de façon à servir d'appareil de travail du sol, et dans lequel la spirale (12) est supportée par un châssis (11), et dans lequel ledit arbre (18) est également supporté par ledit châssis, et dans lequel, de préférence, ladite spirale possède un noyau axial central (15) qui s'étend sensiblement parallélement audit arbre (18).

9. Appareil selon l'une quelconque des revendications précédentes, dans lequel ladite spirale (12) est sensiblement hélicoïdale et le pas de ladite spirale hélicoïdale est sensiblement le même que celui desdites brosses (19), de telle sorte que lesdites brosses fassent saillie d'une manière régulière entre les spires de ladite spirale.
